# EUROPEAN PATENT APPLICATION

(11) **EP 1 403 632 A1**
(43) Date of publication of application: **31.03.2004**
(21) Application number: 03020427.5
(22) Date of filing: 11.09.2003
(51) Int. Cl.: G01N 15/14

(54) **Prism-based flow cytometry excitation optics**

(30) Priority: 27.09.2002 US 256883
(71) Applicant: Becton Dickinson and Company, Franklin Lakes, New Jersey 07417-1880 (US)
(72) Inventor: Blasenheim, Bary J., San Jose California 95126 (US)
(74) Representative: Weber, Thomas, Dr.Dipl.-Chem.

(57) **Abstract**

A prism-based cytometry excitation optics system redirects, shapes and combines plural beams provided by light sources, so they can be focused by an objective into closely spaced spots within the channel of a cytometry flow cell. The mounted set of dispersive prisms redirect beams of different wavelengths so that beams with separated inputs emerge from the final prism, substantially overlapping in position and nearly parallel to one another. Preferred embodiments having a mounted set of four distinct isosceles triangular prisms are described with particular orientations and positions, but the specific design parameters may vary depending on the choice of beam wavelengths, spot separations in the flow cell, and choice of prism material. The prism system has inherently better thermal and long-term stability compared to mirror-based optics.

## Description

### TECHNICAL FIELD

The present invention relates to optical systems for delivering excitation light to a cytometry flow cell, and also relates to optical systems for directing and combining light beams of different wavelengths into a common light path of largely parallel, closely spaced or overlapping beams.

### BACKGROUND ART

Commercially available flow cytometry systems use any of several types of excitation system to deliver one or more focused beams of light to a cytometry flow cell in order to excite sample material in the cell to fluorescence. The excitation optics of existing systems are typically based on one or more mirrors that steer the light from laser sources by means of reflection to the cell location. The mirrors provide a degree of freedom in where to mount the lasers. Because commercial lasers come in a variety of different shapes, sizes and mounting features, the added flexibility is advantageous. However, the mirror mounts are a potential source of instability affecting the maintenance overhead and long-term reliability of these systems.

Typical cytometry systems require excitation light of several wavelengths to be delivered to approximately the same location, e.g. within 1 mm of each other. Different wavelength beams are typically combined by using dichroic mirrors. Because dichroic mirrors tend to lose about 15% of the light being transmitted through them and also lose about 5% of the light reflected off them, these mirrors tend to decrease the potential efficiency of the excitation system. They also contribute to the aforementioned instability problem.

The instability arises in mirror-based systems in part because any change in mirror orientation or tilt of size Δθ causes a change in the light reflection angle of 2·Δθ. Since most systems have multiple mirrors in succession, each mirror magnifies the problem. Most systems require periodic realignment, often as much as once per day. This can be a difficult, time-consuming task. Other systems use mirror mounts that are specially designed to be very stable, so they will not drift as quickly over time or with temperature changes, and thus need less frequent realignment. However, these special mounts tend to be very expensive.

An object of the present invention is to provide a flow cytometry excitation system, which avoids the use of dichroic or other mirrors, which can be built with a small number of inexpensive components, with substantially more thermal and long-term stability.

### DISCLOSURE OF THE INVENTION

The object is met by excitation optics based on prisms to combine multiple laser beams and direct the combined beam to a cytometry flow cell. Unlike dichroic mirrors, a prism's transmittance is typically in excess of 99%, resulting in improved excitation efficiency. And unlike mirrors of any kind, a change or tilt in prism orientation of size Δθ changes the output beam angle by much less than Δθ, and thus each mounted prism element is inherently much more stable than a corresponding mirror element. All laser beams pass through a common set of prisms. The dispersion of the refractive prism material is used to affect the combining of laser beams of different wavelengths. In addition the prisms produce an elliptical beam.

An excitation system in accord with the invention includes a plurality of light sources emitting beams of different wavelengths that are input into a series of prisms. The laser beams can be fed to the first prism via optical fibers, or the lasers can be positioned so that the beams go directly to the first prism, or wedge pieces can be used to bend one or more of the laser beams to the correct input angle. While any number of prisms can be used, more prisms allow greater separation in the input beams, and an even number of prisms allows the output beam of one of the wavelengths to be parallel to its input beam. In one arrangement of prisms the input and output beams of one wavelength are also collinear. A system with four prisms is preferred. The light beams exiting the prisms are combined in the sense that they overlap one another spatially, although they are designed to have slightly different exit angles from the final prism (e.g., 10' arc difference). The combined beam is focused by an objective lens system into the cytometry flow cell. The slightly different exit angles of the different beams mean that the light of each different wavelength focuses to a slightly different spot within the flow cell (e.g., 200µm spot separations).

### BRIEF DESCRIPTION OF THE DRAWINGS

Figs. 1 and 2 are respectively perspective and side elevational views of a flow cytometry excitation system in accord with the present invention.
Fig. 3 is a close-up view of a prism arrangement in the excitation system of Fig. 2.
Fig. 4 is a schematic view of the principal optical components of the embodiment seen in Figs. 1-3.
Fig. 5 is a schematic view of the prisms in the Fig. 4 embodiment denoting certain key parameters of a preferred prism design.
Figs. 6 and 7 are schematic views of alternative embodiments showing different ways of coupling light from the laser sources into the first of the prisms.
Fig. 8 is a schematic view illustrating an alternative prism arrangement from that seen in Fig. 4.

### BEST MODE OF CARRYING OUT THE INVENTION

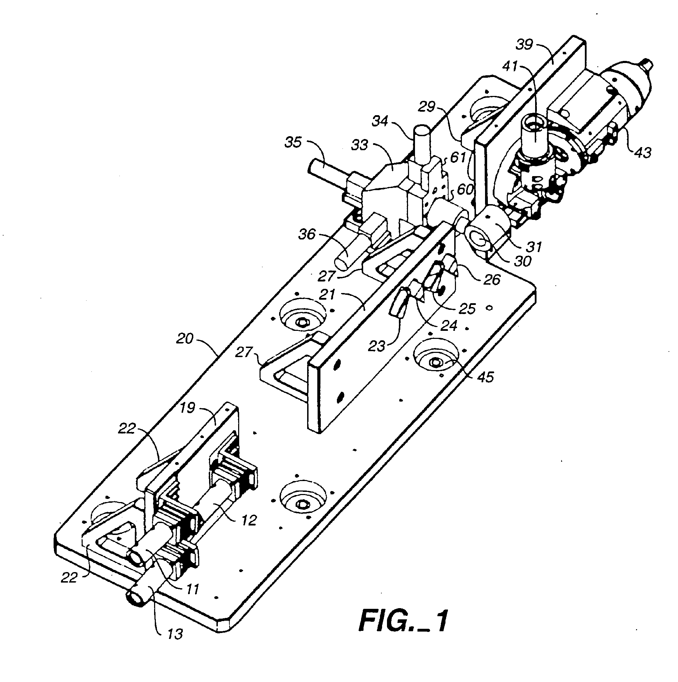

With reference to Figs. 1-3, a flow cytometry excitation system is shown incorporating prism-based optics of the present invention. Three lasers, not shown, produce illumination light beams of different wavelengths, which are directed through optical fibers linked to the system by mounts. The first, second and third optical fiber mounts, 11, 12, and 13 respectively, each receive an optical fiber bringing illumination light from a laser. The optical fiber mounts are themselves mounted on a plate 19, which is secured to a platform 20 by braces 22. Braces 22 ensure that plate 19 will be maintained in a fixed position.

A series of prisms 23-26 are used to combine the illumination beams into illumination light having a substantially common light path (closely spaced or overlapping, and largely parallel). The prisms also shape the beams. (It is preferred that the light beams be elliptical at the point of illumination, concentrating the illumination energy at the central location of the core of the flow stream.) As the light is directed through successive prisms 23-26, the illumination beams of different wavelengths are differentially refracted by the prisms, such that the beams are redirected and aligned at the illumination location within a flow cell.

Prisms 23-26 are mounted on a plate 21, which is secured to the platform 20 by braces 27. The mounts for the laser fiber couplings may be adjusted once at the set up of the system, positioning each element in fixed locations. This may be performed by either individually adjusting the mounts for each element, or repositioning the plates on which elements are mounted so that a number of elements are moved together, or both.

The illumination beams pass through the prism-based combining optics and then pass through an objective lens system 30 held in a lens mount 31. Lens mount 31 is extends from an arm 60 secured to plate 61 on a lens positioning block 33 that is mounted on platform 20. A set of knobs 34-36 associated with the positioning block 33 move the lens mount 31 along orthogonal axes x, y and z in order to adjust the position of the objective lens 30.

The illumination beams pass through the lens objective 30 and are focused into the flow channel of the cytometry flow cell 41. The prisms 23-26, in addition to combining the beams also make the beams elliptical. As particles pass through the flow channel and cross the illumination light beams, light will be scattered by the particles and fluorescence will be excited. Forward scattered light will be detected by a light scatter detector 43. Emitted fluorescence as well as large angle scattered light will be collected by an emission collection lens contained in housing 50. Flow cell 41, light scatter detector 43 and emission collection lens contained in housing 50 are all mounted on a plate 39 that is held in place on platform 20 by a brace 29.

In the system of Figs. 1-3, the optics for bringing in the light beams, redirecting the beams into the desired illumination orientation, collection of the scattered and emitted fluorescence are all held in a fixed position. In addition, the flow cell is also held in a fixed position. These elements are each mounted on a plate and need to be aligned initially when the instrument is installed. Routine realignment of these elements will not be required. The illumination lens could be routinely realigned. However, alignment of a single element greatly simplifies the time and difficulty of alignment.

Using prism-based beam redirecting and combining optics and mounting them in a fixed position provides a method of combining illumination beams into a single illumination beam that does not require mirrors (and the attendant loss of light or degree of instability characteristic of mirrors) and avoids having to frequently realign the optical elements. Fixing the location of the flow cell allows the distance between the flow channel and the illumination optics and detection optics to remain constant. This allows the illumination optics and the detection optics to also be located at fixed locations. Also, having a fixed location flow cell and light collection optics allows the flow cell to be joined to the collection lens in a way that minimizes loss of collected light.

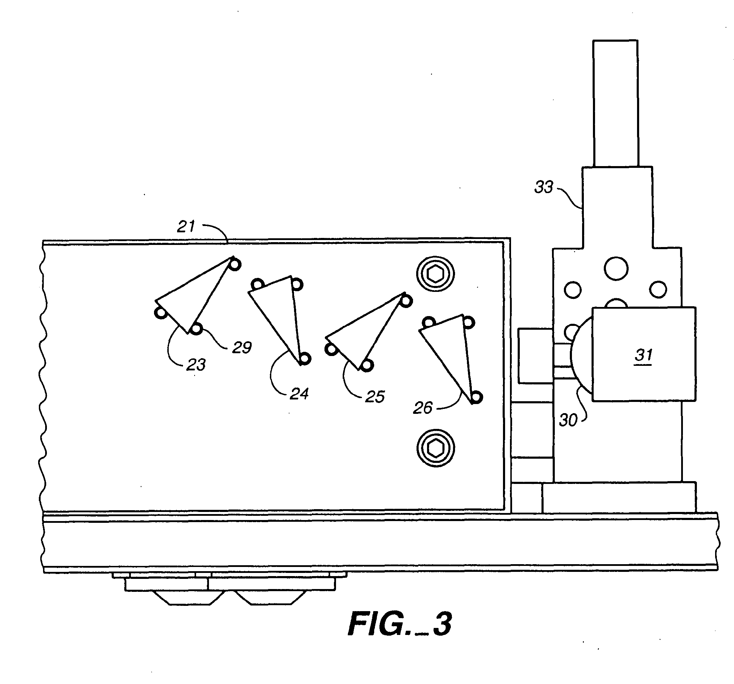

With reference to Figs. 3-5, a preferred embodiment of the prism-based optics has four dispersive prisms 23-26 mounted to plate 21 via standard mounting elements 29, such as flexure posts or pins, mechanical clamps, or adhesives, in specific orientations. The dispersion of the prisms combines the different wavelength input beams into an overlapping position after the last of the series of prisms. A final lens 30 then focuses the light emerging from the last prism 26 into closely spaced spots in the flow channel of a cytometry flow cell 41. In the embodiment shown in Figs. 3-5, three light beams of three different wavelengths are brought to three spots in the flow channel, but the number of beams used can vary. In addition to redirecting and reducing the beams, the light beams are also reshaped by the prisms 23-26 to make them elliptical. Elliptical beams provide better resolution in flow cytometry applications than round beams.

There are several ways to arrange the prisms 23-26. In the preferred configuration seen in Figs. 3-5, the prisms are composed of Schott optical glass type LF5 (581409) in the shape of isosceles triangles and have apex angles of 29°. Other optical materials, prism shapes (e.g. right triangular prisms) and prism apex angles might be used with appropriate modifications in orientation and position. The prisms are seen to be separate in the preferred embodiment. However, bonded prism structures of different optical materials (different refractive indices), such as Zenger and Wernicke prism constructions, could also be used with appropriate design modifications (determined with readily available optical design software). Dispersive prism arrangements that redirect and reshape incoming beams of different wavelengths to outgoing beams that substantially overlap and are substantially parallel (e.g., output angle separations of less than 1°, and preferably only 10' arc separation) are acceptable.

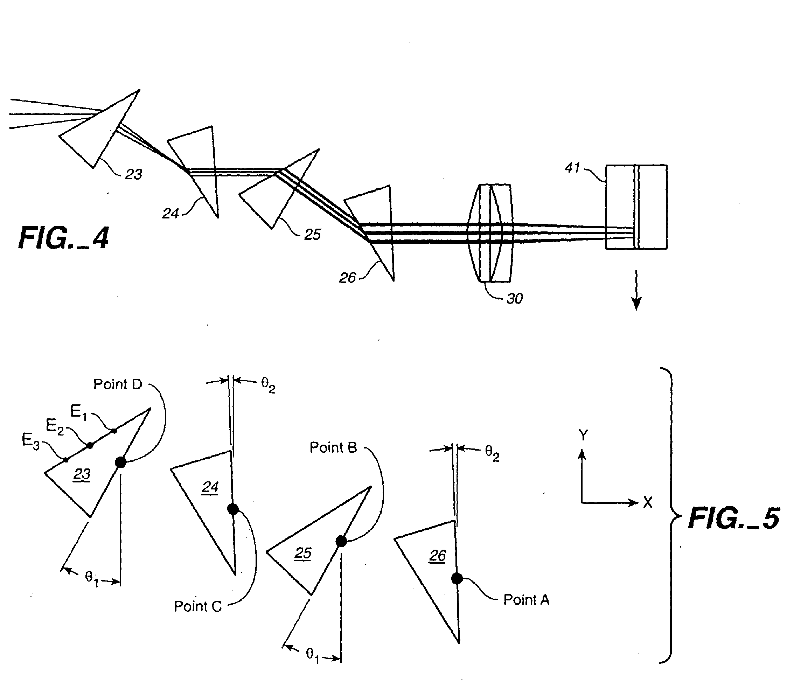

In Figs. 3-5, prism orientation angles θ₁ and θ₂ are respectively 31.233° and 6.47°. The first and third prisms 23 and 25 are oriented apex up, while the second and fourth prisms 24 and 26 are oriented apex down. Points A, B, C, and D are in the centers of the prism surfaces of prisms 26, 25, 24 and 23. Their positions in (X,Y) coordinates (referring to the directions indicated by the axes in Fig. 5), and millimeter units, are respectively
A = (0.0, 0.0);
B = (-25. 0, 7.9);
C = (-50.0, 11.2); and
D = (-75.0, 19.1).

With these positions and orientations, three beams of different wavelengths, e.g., 405nm (violet), 488nm (blue) and 640nm (red), input into the first prism 23 at the appropriate entry points E₁, E₂ and E₃ and with the appropriate entry angles will be redirected by the prisms 23-26 until the emerge from prism 26 in substantially overlapping positions at point A. The following table shows the entry coordinates and angles for the three beams of specified wavelengths. The positions and angles will differ if different wavelengths are chosen. For example, one wavelength might fall between about 395nm and 420nm. The second wavelength can be provided by an argon ion laser and have a 488nm or 351nm wavelength. A third wavelength might fall in range between about 633nm and 640nm. The input parameters for a given wavelength can be found by working back from the output coordinates (0,0) for point A and the desired output angles at point A (e.g., -0.1685°, 0°, +0.1685°), using the prism surface angles and prism material (e.g. Schott glass LF5) refractive indices for the particular wavelengths. This is usually accomplished using optical design software.

| Wavelength | Entry Point | Entry Coordinates | Entry Angle | Magnification through prisms |
|---|---|---|---|---|
| 405nm | E₁ | (-79.82, 23.32) | -3.713 | 8.09 |
| 488nm | E₂ | (-81.44, 22.40) | 0.000 | 8.00 |
| 640nm | E₃ | (-82.88, 21.57) | 3.209 | 8.14 |

These 405nm, 488nm and 640nm beams exit at point A with angles -0.1685°, 0°, and +0.1685°. With an objective lens 30 having an effective focal length of 68mm, the beams will have a spacing of 200µm at their respective focal points within the channel of cytometry flow cell 41.

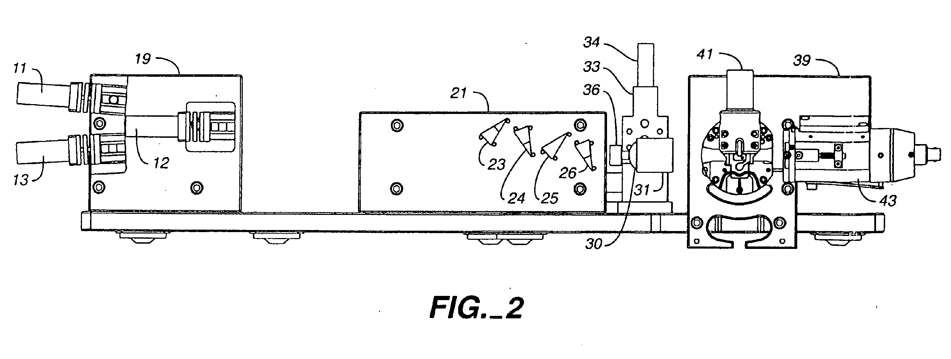

The embodiment shown in Figs. 1 and 2 uses fiber coupling of the lasers, with the output couplers 11-13 of the single-mode optical fibers mounted onto optics plate 19. This means that the lasers can be mounted remotely in an area of the system that is not heat sensitive. (Some lasers used in flow cytometry applications put out over 1000W of heat.) Remote mounting also makes it much easier to accommodate the different shapes and mounting features of the laser packages. Most importantly, fiber mounts have a beam pointing stability of less than 2µrad/°C. Coupled with the inherent stability improvement brought about by the use of prisms instead of mirrors, the need for expensive mounts is substantially reduced.

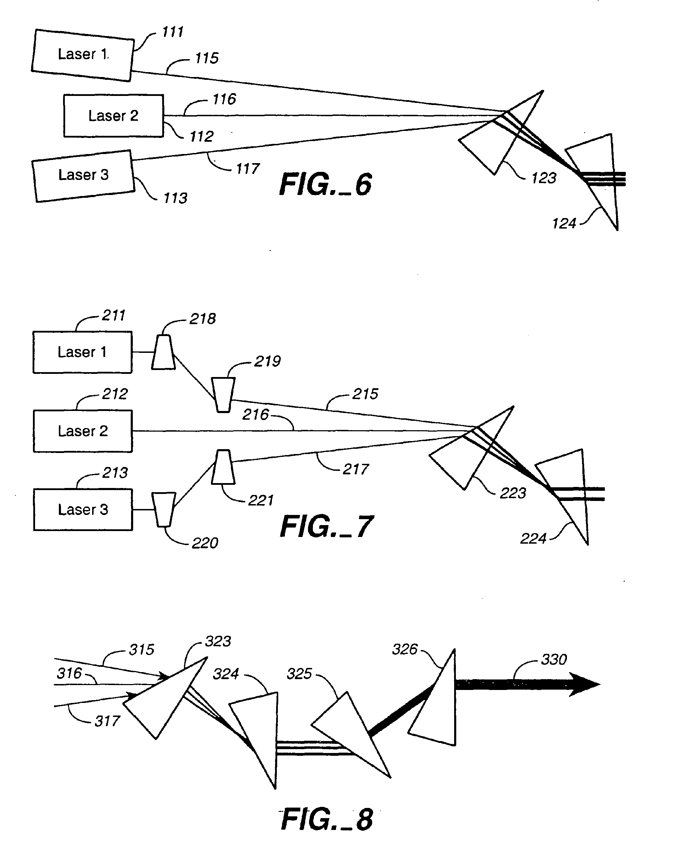

In Fig. 6, one variation may do without optical fibers (which can have optical losses of up to 35%), and launch the laser beams 115-117 directly into the prisms 123, etc. using lasers 111-113 that are also mounted to an optics plate at specific angles. In Fig. 7, another variation uses sets of wedge pieces 218-221 to bend one or more of the laser beams 215-217 (here only 215 and 217 are so bent) to the desired angles and entry positions. The wedge pieces 218-221 allow greater freedom in how the lasers are positioned, at the cost of slightly greater thermal and drift instability. However, this configuration is still more robust than systems that use mirrors.

Fig. 8 shows a different arrangement of prisms 323-326 from that shown in Figs. 3-5. Here the orientation of the second pair of prism elements 325 and 326 have been inverted relative to the pair 25 and 26 in Figs. 3-5. That is, first and fourth prisms 323 and 326 are oriented apex up, while second and third prisms 324 and 325 are oriented apex down. The positions of the four prisms have been altered as well, with the middle two prisms 324 and 325 seen to be vertically lower than the outer prisms 323 and 326 in the figure. Like Figs. 3-5, the arrangement in Fig. 8 will also combine the laser beams and reshape them to make them elliptical. An advantage to the Fig. 8, arrangement is that the combined output beams 330 are not only substantially parallel to the central input beam 316, but also collinear. A potential disadvantage is that the angular separation between the input beams 315-317 in Fig. 8 is smaller than the separation between input beams in Figs. 3-5.

Other variations in prism arrangement are possible. For example, any number of prisms can be used. If two prisms are used instead of four, the input angular separation will be smaller than an equivalent four prism arrangement. Six prisms will allow even greater angular separation of the inputs, but at the cost of extra mounted elements and potential increase of instability. Likewise, a single prism will have even less angular separation of the input beams to obtain the same overlapping, near parallel outputs, and none of the output beams will be parallel to its corresponding input beam. Nevertheless, these alternatives will still provide dispersive combining of different wavelength beams needed to create closely spaced focused spots within a cytometry flow cell. The thermal and long-term stability of each configuration will be much better than as good as a mirror-based system having the same number of mounted components.

## Claims

1. In a flow cytometry system, excitation optics for delivering excitation light beams to a cytometry flow cell, comprising:
a plurality of light sources producing light beams of different wavelengths;
a mounted set of dispersive prism elements arranged in sequence so that all of the light beams from said sources pass through each of the prism elements in succession and are refracted by different amounts by said prism elements, input positions and angles of the light beams selected so that the refracted beams from the final prism element in the sequence substantially overlap are nearly parallel to one another and elliptical; and
an objective lens focusing the beams from the final prism element to closely spaced spots within the cytometry flow cell.

2. The cytometry excitation optics of claim 1 wherein the nearly parallel refracted beams have angular separations at the output surface of the final prism element of less than 1°.

3. The cytometry excitation optics of claim 1 wherein the light beams are delivered to the mounted set of dispersive prism elements via optical fibers with mounted output couplers in fixed relation to the prism elements.

4. The cytometry excitation optics of claim 1 wherein the light beams are delivered to the mounted set of dispersive prism elements directly, the light sources being mounted in fixed relation to the prism elements.

5. The cytometry excitation optics of claim 1 wherein at least one of the light beams is delivered to the mounted set of dispersive prism elements via mounted optical wedge pieces directing that beam from a mounted light source to the prism elements, the light source and wedge pieces being mounted in fixed relation to the prism elements.

6. The cytometry excitation optics of claim 1 wherein the number of light sources, light beams and wavelengths is three.

7. The cytometry excitation optics of claim 6 wherein one of the light beams has a wavelength in a range from about 395nm to 420nm.

8. The cytometry excitation optics of claim 6 wherein one of the light sources is an argon laser providing a light beam of 488nm wavelength.

9. The cytometry excitation optics of claim 6 wherein one of the light beams has a wavelength in a range from about 633nm to 640nm.

10. The cytometry excitation optics of claim 1 wherein the number of prism elements is four.

11. The cytometry excitation optics of claim 10 wherein each of the prism elements is a distinct isosceles triangular prism with a specified apex angle.

12. The cytometry excitation optics of claim 11 wherein the prism apex angle is 29°, wherein each of the first and third prism elements is mounted apex up at a 31.233° orientation angle between its prism output surface and vertical and each of the second and fourth prism elements is mounted apex down at a 6.47° orientation angle between its prism output surface and vertical, wherein the centers of the prism output surfaces have coordinates (-75.0, 19.1), (-50.0, 11.2), (-25.0, 7.9) and (0.0, 0.0), and wherein the prisms are composed of a flint glass material substantially like Schott optical glass LF5 (581409).

13. The cytometry excitation optics of claim 12 wherein a first beam of wavelength 405nm has a -3.713° entry angle and (-79.82, 23.32) entry coordinates at the first prism element, a second beam of wavelength 488nm has a 0.0° entry angle and (-81.44, 22.40) entry coordinates, and a third beam of wavelength 640nm has a +3.209° entry angle and (-82.88, 21.57) entry coordinates.

14. The cytometry excitation optics of claim 1 wherein the number of light sources include an argon ion laser providing a light beam of 351nm with an input angle of 6.904°.

15. The cytometry excitation optics of claim 11 wherein first and fourth prisms are mounted apex up and second and third prisms are mounted apex down, the prisms positioned and oriented such that input and output of one beam through the set of prisms are collinear.
